Europäisches Patentamt

European Patent Office

Office européen des brevets

(19)

(11) Veröffentlichungsnummer: **0 495 180 A2**

# (12) EUROPÄISCHE PATENTANMELDUNG

(21) Anmeldenummer: **91119909.9**

(22) Anmeldetag: **22.11.91**

(51) Int. Cl.$^5$: **G01N 3/18**, G01N 3/04

(30) Priorität: **18.01.91 DE 4101321**

(43) Veröffentlichungstag der Anmeldung:
**22.07.92 Patentblatt 92/30**

(84) Benannte Vertragsstaaten:
**FR GB GR NL**

(71) Anmelder: **MESSERSCHMITT-BöLKOW-BLOHM GmbH**
**Postfach 80 11 09**
**W-8000 München 80(DE)**

(72) Erfinder: **Schoberth, Achim**
**Ahornring 16**
**W-8021 Taufkirchen(DE)**
Erfinder: **Meyer, Joseph**
**Rosenheimer Strasse 15**
**W-8011 Grosshelfendorf(DE)**
Erfinder: **Dietrich, Gerd**
**Erlenstrasse 13**
**W-8011 Hohenbrunn(DE)**

(54) **Hochtemperatur-Druckfestigkeits-Prüfvorrichtung.**

(57) Bei einer Vorrichtung 1, 20 zur Bestimmung der Druckfestigkeit von hochtemperaturbeständigen Materialien, die in eine Druckprüfmaschine einspannbar ist, mit außen konisch verjüngten Klemmbacken 6 zum Einsetzen einer Probe 7, mit den Klemmbacken 6 aufnehmenden Klemmhülsen 5, 25 und mit einem die Einspannteile umgebenden Ofen 12 zur Aufheizung der Probe bestehen die Klemmbacken 6 und die Klemmhülsen 5, 25 aus Graphit. Die Klemmhülsen 5, 25 sind in Stützringe 10, 22a aus kohlenstoffaserverstärktem Kohlenstoff eingesetzt, wobei die Stützringe einen kleineren thermischen Ausdehnungskoeffizienten als die Klemmhülsen aufweisen. Die gesamte Vorrichtung 1, 20 ist in eine evakuierbare Kammer 13, die auch mit Schutzgas gefüllt werden kann, eingesetzt.

FIG. 1

EP 0 495 180 A2

Die Erfindung betrifft eine Vorrichtung zur Bestimmung der Druckfestigkeit von hochtemperaturbeständigen Materialien gemäß dem Oberbegriff des Anspruchs 1.

Für bestimmte Anwendungsgebiete, z.B. in der Raumfahrt und im Triebwerksbau, werden Werkstoffe eingesetzt, die bei Temperaturen bis zu 2500 °C noch ausreichende Festigkeit aufweisen müssen. Diese Werkstoffe sind insbesondere Graphit und kohlenstoffaserverstärkter Kohlenstoff. Zur Entwicklung dieser Werkstoffe sind umfassende Werkstoffprüfungen erforderlich.

Die nicht vorveröffentlichte ältere Anmeldung DE 39 24 345 A1 beschreibt eine Einspannvorrichtung für die Zugprüfung von Proben bei hohen Temperaturen mit einem die Einspannteile samt Probe umgebenden Ofen, mit koaxial verjüngten Klemmbacken und mit dieselben aufnehmenden Klemmhülsen, welche aus Kohlenstoff, Graphit oder aus kohlenstoffaserverstärktem Kohlenstoff hergestellt sind. Weiterhin weist diese Einspannvorrichtung als Kraftmittler zwischen der Prüfmaschine und den Klemmhülsen Zugrohre auf, die die Klemmhülsen aufnehmen und mit diesen durch Bolzen verbunden sind. Da es sich um eine Zugspannvorrichtung handelt, ist der gesamte Aufbau zwangsläufig anders als bei einer Druckfestigkeits-Prüfvorrichtung.

Bekannte Einspannvorrichtungen für Druckfestigkeits-Prüfvorrichtungen sind nicht zur Prüfung von Werkstoffen bei hohen Temperaturen geeignet und weisen daher auch keine die Einspannteile samt Probe umgebenden Öfen auf. Derartige Einspannvorrichtungen, die zwar bereits kegelige Klemmbacken und Klemmhülsen mit Führungsbolzen aufweisen, sind z.B. durch die JP 62-238 440 A und EP 0 300 702 A2 bekannt.

Aus der US 3 176 499 ist eine Zugspannvorrichtung bekannt, in der Proben bei sehr hohen Temperaturen geprüft werden können. Bei dieser Vorrichtung wird die Probe mit einer elektrischen Widerstandsheizung aus Tantal erhitzt und die Probe einschließlich der Einspannung befindet sich in einer Vakuumkammer.

Die DE 31 24 877 A1 zeigt eine Einspannvorrichtung für Werkstoffprüfmaschinen zur Durchführung von Wechselspannungs- und Wechseldehnungsversuchen bei hohen Temperaturen. Bei dieser Vorrichtung ist auch ein Ofen vorgesehen, der die Probe und die Einspannvorrichtung umgibt.

Durch die DE 30 23 063 C2 ist weiterhin eine Zugspannvorrichtung mit Einspannköpfen aus keramischem Material bekannt, die bis zu Temperaturen von etwa 1600 °C benutzt werden kann. Diese sowie die vorstehend genannte Werkstoffprüfmaschine sind aufgrund der Werkstoffe für ihre Einspannelemente für Proben von hochwarmfesten Werkstoffen aus Graphit oder kohlenstoffaserverstärktem Kohlenstoff nicht geeignet.

Der Erfindung liegt die Aufgabe zugrunde, eine Druckfestigkeits-Prüfvorrichtung der eingangs genannten Art so auszubilden, daß mit ihr Druckfestigkeitsprüfungen bis zu etwa 2500 °C möglich sind.

Diese Aufgabe wird durch die im Anspruch 1 gekennzeichneten Merkmale gelöst. Vorteilhafte Ausgestaltungen der Erfindung sind in den Unteransprüchen gekennzeichnet.

Die Erfindung nutzt die hohe Temperaturbeständigkeit von Graphit und kohlenstoffaserverstärktem Kohlenstoff für die innerhalb des Ofens untergebrachten Teile der Vorrichtung aus. Die Teile für die Vorrichtung sind einfach herzustellen, da die angeführten Werkstoffe leicht bearbeitbar und billig sind. Dadurch besteht auch die Möglichkeit einer guten Anpaßbarkeit an verschiedene Probenformen. Ein wesentlicher Vorteil besteht auch darin, daß die Klemmbacken, in die die Probe in bekannter Weise eingesetzt wird, und die sie umgebende Klemmhülse aus Graphit gefertigt sind und letztere zur Stützung des spröden Graphitmaterials und zur Aufnahme von eventuellen Zugspannungen in einen Stützring aus kohlenstoffaserverstärktem Kohlenstoff eingesetzt sind. Da kohlenstoffaserverstärkter Kohlenstoff einen niedrigeren Ausdehnungskoeffizienten als Graphit aufweist, findet bei Erwärmung eine innige Verbindung der Klemmhülse mit dem Stützring und somit eine gute Übertragung der Druckkräfte von der Prüfmaschine auf die Vorrichtung und die Probe statt. Ein weiterer Vorteil für die Verwendung von Graphit für die Klemmbacken und Klemmhülsen besteht darin, daß Graphit auch bei sehr hohen Temperaturen sehr gute Gleiteigenschaften aufweist. Da Graphit und kohlenstoffaserverstärkter Kohlenstoff bei den Prüftemperaturen bis zu 2500° C mit dem Sauerstoff der Luft verbrennen würden, ist die gesamte Vorrichtung in eine evakuierbare Kammer eingesetzt, die mit Schutzgas gefüllt wird. Führungsbolzen zwischen den Klemmhülsen, die ebenfalls aus Graphit oder kohlenstoffaserverstärktem Kohlenstoff bestehen, dienen der genauen axialen Ausrichtung der Klemmhülsen und verhindern das Ausknicken der Vorrichtung bzw. eine daraus resultierende unerwünschte Biege- und Scherbelastung der Probe bei der Prüfung.

Die Erfindung wird nachfolgend anhand von zwei in der Zeichnung dargestellten Ausführungsbeispielen erläutert. Es zeigen:

Fig. 1   eine erste Ausführungsform einer Druckfestigkeits-Prüfvorrichtung und

Fig. 2   eine zweite Ausführungsform der Druckfestigkeits-Prüfvorrichtung.

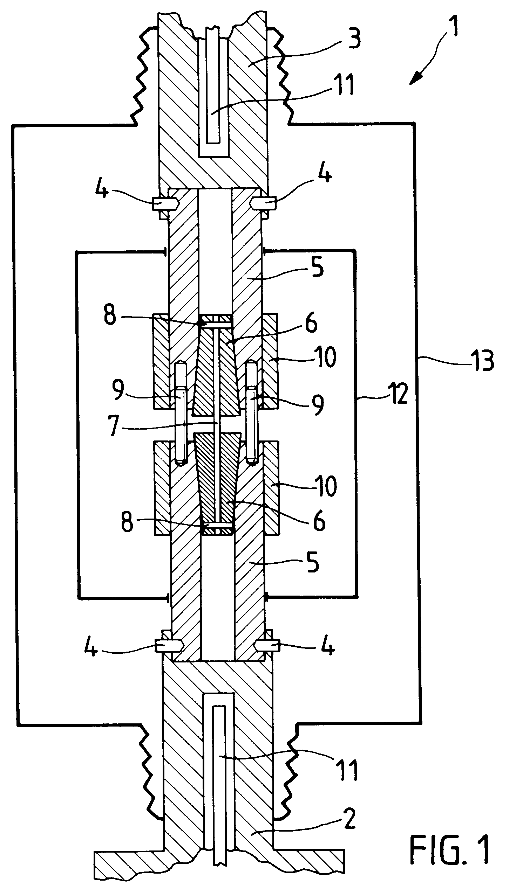

Eine Druckfestigkeits-Prüfvorrichtung 1 nach Fig. 1 ist unten auf einem Sockel 2 gelagert und hat oben ein Ansatzstück 3 zu einer nicht dargestellten Prüfmaschinentraverse, die eine in Achsrichtung der Prüfvorrichtung 1 wirkende Kraft ausüben kann. Zwischen dem Sockel 2 und dem Ansatzstück 3 ist die Prüfvorrichtung 1 symmetrisch ausgeführt. An den Sockel 2 und das Ansatzstück 3 sind mit Haltestiften 4 Klemmhülsen 5 aus Graphit angesetzt, die sich innen an ihren Enden zur Aufnahme von Klemmbacken 6 konisch erweitern. In Klemmbacken 6, die ebenfalls aus Graphit bestehen, ist eine Probe 7 eingespannt, die mit Mitnehmerstiften 8 fixiert ist und die bei Belastung entsprechend dem Keilprinzip verspannt und gehalten wird. Zur Zentrierung der Klemmhülsen 5 dienen mindestens zwei Führungsbolzen 9, die auch das Ausknicken bzw. eine daraus resultierende unerwünschte Biege- und Scherbelastung der Probe 7 bei der Prüfung verhindern sollen. Mitnehmerstife 8 und Führungsbolzen 9 sind entweder aus Graphit oder kohlenstoffaserverstärktem Kohlenstoff gefertigt. Außen um die Klemmhülsen 5 sind Stützringe 10 angeordnet. Letztere sind aus kohlenstoffaserverstärktem Kohlenstoff mit einem kleineren thermischen Ausdehnungskoeffizienten als die Klemmhülsen 5 gefertigt, um eine mechanische Verspannung bei Prüftemperatur zu erreichen. In den Sockel 2 und das Ansatzstück 3, die aus einem hochwarmfesten Metall hergestellt sein können, reichen Wasserkühlungsrohre 11 hinein. Die Probe 7 und ihre Einspannteile sind in einem Ofen 12 eingesetzt, der entweder induktiv beheizt wird oder eine Widerstandsheizung aufweist. Die gesamte Vorrichtung 1 ist in einer evakuierbaren Kammer 13 untergebracht, die in bekannter Weise auch mit einem Schutzgas, wie z.B. Stickstoff, Argon oder Helium gefüllt werden kann.

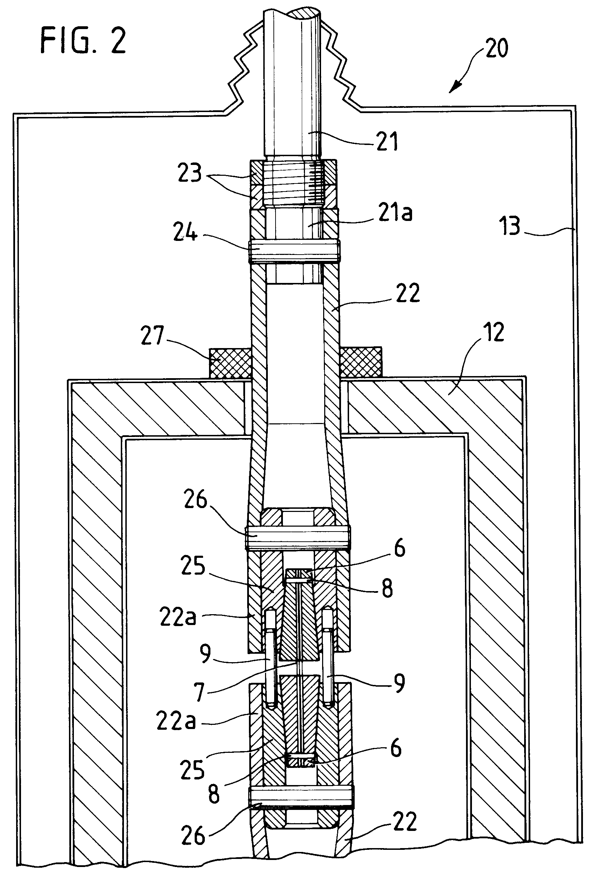

Das Ausführungsbeispiel nach Fig. 2 zeigt eine Druckfestigkeits-Prüfvorrichtung 20, bei der der untere Teil mit dem Prüfmaschinensockel nicht dargestellt ist. Die Prüfvorrichtung 20 ist ebenso wie diejenige nach Fig. 1 symmetrisch ausgeführt. Ansatzstücke 21 zur Prüfmaschinentraverse bzw. zum Prüfmaschinensockel sind mit Zapfen 21a in Stützrohre 22 eingesetzt und mit Kontermuttern 23 und Bolzen 24 steif verbunden. Die anderen Enden der Stützrohre 22 sind mit eingesetzten Klemmhülsen 25 durch Bolzen 26 verbunden. In die Klemmhülsen 25 sind wiederum Klemmbacken 6 zur Aufnahme der Probe 7 eingesetzt, wobei letztere durch die Mitnehmerstifte 8 fixiert sind. Die Klemmhülsen 25 sind auch hier durch Führungsbolzen 9 zentriert. Die Stützrohre 22 dienen im Mittelteil der Prüfvorrichtung 20 als Stützringe 22a. Die Klemmhülsen 25 und Klemmbacken 6 sind auch hier aus Graphit und die Stützrohre 22 aus kohlenstoffaserverstärktem Kohlenstoff gefertigt. Die Probe 7 mit ihren Einspannteilen ist auch hier in dem Ofen 12 und die ganze Prüfvorrichtung 20 in der evakuierbaren Kammer 13 untergebracht. Zusätzlich zur Fig. 1 sind hier noch außen am Ofen 12 um die Stützrohre 22 Wärmeisolierringe 27 angeordnet.

**Patentansprüche**

1. Vorrichtung zur Bestimmung der Druckfestigkeit von hochtemperaturbeständigen Materialien, die in eine Druckprüfmaschine einspannbar ist, mit Klemmbacken, die die Form eines stumpfen Kegels und eine innere Bohrung zur Aufnahme einer Probe aufweisen, mit die Klemmbacken aufnehmenden Klemmhülsen und mit einem Ofen, der die Klemmhülsen, die Klemmbacken und die Probe umgibt, **dadurch gekennzeichnet**, daß die Klemmbacken (6) und die Klemmhülsen (5,25) aus Graphit bestehen und die Klemmhülsen (5,25) in Stützringe (10,22a) aus kohlenstoffaserverstärktem Kohlenstoff eingesetzt sind, wobei die Stützringe (10,22a) einen kleineren thermischen Ausdehnungskoeffizienten als die Klemmhülsen (5,25) aufweisen, und daß die gesamte Vorrichtung (1,20) in einer evakuierten Kammer (13) eingesetzt ist.

2. Vorrichtung nach Anspruch 1, **dadurch gekennzeichnet**, daß die evakuierbare Kammer (13) mit einem Schutzgas gefüllt ist.

3. Vorrichtung nach den Ansprüchen 1 und 2, **dadurch gekennzeichnet**, daß die Klemmhülsen (5, 25) durch Führungsbolzen (9) aus Graphit oder kohlenstoffaserverstärktem Kohlenstoff miteinander verbunden sind.

4. Vorrichtung nach Anspruch 1, **dadurch gekennzeichnet**, daß die Stützringe (10) die Klemmhülsen (5) nur etwa im Bereich der Klemmbacken (6) umfassen und die Krafteinleitung aus der Prüfmaschine und Kraftüberleitung zum Prüfmaschinensockel (2) direkt über die Klemmhülsen erfolgt (Fig. 1).

5. Vorrichtung nach Anspruch 1, **dadurch gekennzeichnet**, daß die Stützringe (22a) Teile von Stützrohren (22) sind, die als Kraftmittler zwischen der Prüfmaschine bzw. dem Prüfmaschinensockel und den Klemmhülsen (25) angeordnet sind, und daß die Stützrohre (22) mit den Klemmhülsen (25) durch Bolzen (26) verbunden sind (Fig. 2).

6. Vorrichtung nach einem oder mehreren der Ansprüche 1 bis 5, **dadurch gekennzeichnet**, daß die Probe (7) in den Klemmbacken (6) mit Hilfe von Mitnehmerstiften (8) fixiert ist.

FIG. 1

FIG. 2